# EUROPÄISCHE PATENTSCHRIFT

(11) **EP 1 732 936 B1**
(45) Veröffentlichungstag und Bekanntmachung des Hinweises auf die Patenterteilung: **27.06.2007**
(21) Anmeldenummer: 05716183.8
(22) Anmeldetag: 17.03.2005
(51) Int. Cl.: C07F 7/12, C07F 7/20

(54) **VERFAHREN ZUM ABTRENNEN VON ALUMINIUMCHLORID AUS ORGANOCHLORSILANEN**
METHOD FOR SEPARATING ALUMINIUM CHLORIDE FROM ORGANOCHLOROSILANES
PROCEDE DE SEPARATION DE CHLORURE D'ALUMINIUM DE SILANES ORGANOCHLORES

(30) Priorität: 23.03.2004 DE 102004014220
(43) Veröffentlichungstag der Anmeldung: 20.12.2006
(73) Patentinhaber: Wacker Chemie AG, 81737 München (DE)
(72) Erfinder: STRAUSSBERGER, Herbert, 84561 Mehring (DE); KALCHAUER, Wilfried, 84489 Burghausen (DE)
(74) Vertreter: Fritz, Helmut
(86) Internationale Anmeldenummer: PCT/EP2005/002886
(87) Internationale Veröffentlichungsnummer: WO 2005/092903

(56) Entgegenhaltungen:
- EP-A- 0 155 626
- DE-B- 1 111 183
- DE-C- 842 057
- US-A- 2 557 782
- US-A- 6 077 967
- SCHMÖLZER H ET AL: "Äquilibrierungsreaktionen an Disilanen" JOURNAL OF ORGANOMETALLIC CHEMSITRY, Bd. 260, Nr. 1, 3. Januar 1984 (1984-01-03), Seiten 31-39, XP002336457 ISSN: 0022-328X in der Anmeldung erwähnt
- SAKURAI H ET AL: "Aluminium chloride-catalysed reactions of organosilicon compounds II. Facile syntheses of alkylchlorosilanes, -germanes and -stannanes (1)" TETRAHEDRON LETTERS, Bd. 7, Nr. 45, 1966, Seiten 5493-5497, XP002336458 ISSN: 0040-4039
- ZEMANY P D ET AL: "Kinetics and thermodynamic properties of the disproportionation of methylchlorosilanes" JOURNAL OF THE AMERICAN CHEMICAL SOCIETY, Bd. 70, Nr. 12, Dezember 1948 (1948-12), Seiten 4222-4226, XP002336459 ISSN: 0002-7863
- SAUER R O ET AL: "Thermal transformations of methylchlorosilanes" JOURNAL OF THE AMERICAN CHEMICAL SOCIETY, Bd. 70, Nr. 11, November 1948 (1948-11), Seiten 3590-3596, XP002336460 ISSN: 0002-7863

## Beschreibung

Die Erfindung betrifft ein Verfahren zur Abtrennung von AlCl₃ aus einem Organochlorsilane enthaltenden Verbindungsgemisch.

Bei der Herstellung von Organochlorsilanen fallen in Abhängigkeit vom Verfahren/Prozess Produktströme an, die Aluminiumchlorid in unterschiedlichen Konzentrationen enthalten können. Das AlCl₃ ist in Abhängigkeit von den Bedingungen, z.B. Temperatur, Chemie der Organochlorsilane, zumindest teilweise im flüssigen Organochlorsilane-Strom gelöst und kann somit durch Filtration nicht entfernt werden. AlCl₃ kann als LewisSäure in Abhängigkeit von der Prozesstemperatur stark störende Einflüsse ausüben.

Eine effektive destillative Trennung von Organochlorsilane und AlCl₃ ist nur bei mittleren Temperaturen bis etwa 150°C möglich, da AlCl₃ die Tendenz zum Sublimieren zeigt und bei der Anwendung von höheren Temperaturen zumindest teilweise mit den Organochlorsilanen über Kopf geht.

Nach Ullmann's Encyclopedia of Industrial Chemistry hat AlCl₃ bei 101,3 kPa eine Sublimationstemperatur von 181,2 °C

Störende Einflüsse von AlCl₃ sind beispielsweise:
1. AlCl₃ reagiert bei höheren Temperaturen mit Siloxanen, wie beispielsweise Methylchlordisiloxanen, unter der Ausbildung von Alumosiloxanen. In Abhängigkeit vom Verzweigungsgrad dieser Alumosiloxane sind diese zähflüssig bis fest und können somit Anlagenteile, wie Rohrleitungen verlegen bzw. im Bereich beheizter Anlagenteile, wie Wärmetauscher durch Ablagerungen den Wärmeübergang stark reduzieren.
   Die Bildung derartigen Alumosiloxane wird beispielsweise beschrieben in "W. Noll, Chemistry and Technology of Silicones, 1968, Seiten 238 und 340 - 342 (1).
2. AlCl₃ katalysiert ausgezeichnet und bereits bei relativ geringen Temperaturen bei Organochlorsilanen den Austausch der organischen Liganden und der Liganden Cl und H, speziell in Gegenwart von Si-H Verbindungen. Diese Reaktionen werden zeitweise gezielt zur Herstellung bestimmter Organochlorsilane eingesetzt. Dieser Ligandentausch kann jedoch auch störend sein, wenn das AlCl₃ nicht bewusst zugesetzt wurde und dadurch das Produktspektrum in eine nicht gewünschte Richtung verschoben wird.
   Derartige Ligandentausch-Reaktionen werden beispielsweise beschrieben in (1), Seiten 57 - 66 und J. Organomet. Chem. 260 (1984), 31 - 39, H. Schmölzer, E. Hengge (2).
   FR 2761360 beschreibt, dass beispielsweise durch die gezielte Zugabe von Verbindungen des Typs (R)-Si-(OR) die katalytische Wirksamkeit von AlCl₃ in Bezug auf den Ligandentausch verringert werden kann. Diese Methode weist jedoch folgende Nachteile auf:
   - es muss ein zusätzlicher Stoff eingesetzt werden, der Kosten verursacht, der
   - im Anschluss wieder vernichtet/entsorgt werden muss und der
   - die destillative Aufarbeitung der Organochlorsilane erschwert.
3. AlCl₃ katalysiert die Zersetzung von Methylchlordisilanen in Richtung Methylchlormonosilane und Oligo-/Polysilane, in Gegenwart von Si-H Bindungen beginnt diese Reaktion bereits ab ca. 105°C. Die gebildeten Oligo-/Polysilane können zähflüssig bis fest und unlöslich sein und können die unter Punkt 1. beschriebenen Probleme auslösen.
   Die Bildung dieser Oligo-/Polysilane wird beispielsweise beschrieben in (2).

Besonders störend ist die Anwesenheit bei den nachstehenden Verfahren:

### 1. Direktsynthese von Methylchlorsilanen nach Müller-Rochow.

Bei der Direktsynthese von Methylchlorsilanen wird Silicium mit MeCl in Gegenwart von verschiedenen Katalysatoren bei etwa 265 - 310°C zur Reaktion gebracht. Dabei bildet sich ein Gemisch aus verschiedenen Methyl-Chlor-(Wasserstoff)-Silanen, wie auch Methylchlordisilane, Methychlordisiloxane und Kohlenwasserstoffe.
Das eingesetzte Si enthält üblicherweise 0,1 - 0,3% Al, ebenso ist bekannt, zusätzlich Al, beispielsweise als Legierung, dem Reaktionssystem zuzusetzen. Unabhängig von der Quelle und der eingesetzten Form bildet sich aus dem Aluminium zumindest teilweise AlCl₃, das auf Grund der Temperaturen das System, mit den Reaktionsprodukten und nicht umgesetzten Ausgangsstoffen, über die Gasphase verlässt.

In "Catalyzed Direct Reactions of Silicon; K.M. Lewis, D.G. Rethwisch; Elsevier 1993; Kapitel 1" (3) auf Seite 18, Figure 3, ist ein schematisches Fliessbild es Prozesses dargestellt, bei dem die feststoffhaltigen Reaktionsprodukte aus der Direktsynthese kondensiert, die Feststoffe abgetrennt und das Rohsilan der Destillation zugeführt werden.
In "Ullmann's Encyclopedia of Industrial Chemistry Vol. A 24, Seite 26" ist ein ähnlicher Prozess dargestellt.

Das auf diese Weise hergestellte flüssige Rohsilangemisch enthält neben den Methylchlormonosilanen auch AlCl₃, Methylchlordisilane, Disiloxane und Kohlenwasserstoffe. Dies bedeutet, dass die unter "störende Einflüsse" beschriebenen Reaktionen während der destillativen Aufbreitung auch dann auftreten, wenn nur das filtrierte, von Feststoff befreite Rohsilangemisch weiterverwendet wird.

In (3) auf Seite 22 - 28 wird alternativ folgende weitere Aufarbeitungsmethode angegeben:
"Das heiße Gas wird nach einer ersten Feststoffabtrennung mittels Zyklon und Heißgasfiltration von unten in einen Wäscher eingeleitet, in dem Produkte mit einem Siedepunkt <170°C von Metallchloriden und anderen Hochsiedern abgetrennt werden. Das Destillat wird in ein Kopfprodukt (Siedepunkt < 71°C) und in ein Seitenprodukt, das hauptsächlich aus den spaltbaren Disilanen besteht, fraktioniert. Das Sumpfprodukt, das Feststoffe und Methylchlorsilane enthält wird regelmäßig abgezogen und der Abfallentsorung zugeführt."

Die Nachteile bei diesem Verfahren sind:
- Da es sich bei den Methylchlorsilanen um ein Gemisch aus viele verschiedenen Substanzen mit einem weiten Siedepunktsbereich handelt, ist es nicht möglich gleichzeitig alle verwertbaren Produkte aus den Sumpf des Wäschers und/oder der Fraktionierungseinheit zu treiben und die Temperatur zum Austreiben der Organochlorsilane so gering zu halten, dass die beschriebenen Nachteile nicht auftreten.
D.h. betreibt man den Wäscher oder die Fraktionierungseinheit bei Temperaturen, bei der die durch AlCl₃ katalysierten Reaktionen noch nicht im merklichen Umfang auftreten, nimmt man automatisch einen Verlust an verwertbaren Methylchlor(di)silanen in Kauf.
Betreibt man jedoch diese Anlagen bei einer höheren Temperatur, bei der fast alle verwertbaren Produkte ausgetrieben werden, treten die unerwünschten Nebenreaktionen im verstärkten Umfang auf, gleichzeitig enthalten die höhersiedenden Fraktionen, wie zum Beispiel die Disilanfraktion, nicht unerhebliche Anteile an mitgerissenem AlCl₃.
- Die anfallenden Rückstände stellen Suspensionen aus flüssigen Organochlorsilanen und Feststoffen dar. Eine Aufarbeitung oder Entsorgung derartiger Produktströme ist allgemein als problematisch einzustufen.

Betrachtet man in (3) Figures 4 und 5, Seite 25, 26 und erläuternder Text, so erkennt man, dass das mit dem "crude MCS direct reaction mixture" eingebrachte AlCl₃ mit den Disilanen in Richtung Column A ausgeschleust wird und spätestens in diesem Bereich bzw. in der nachfolgenden Disilan-Aufarbeitung die bereits mehrfach beschriebenen Probleme hervorrufen wird.

### 2. AlCl₃-katalysierte Hochsieder-Aufarbeitung.

Beispielsweise in der EP 829484 A ist die AlCl₃-katalysierte Spaltung der Hochsieder aus der Methylchlorsilan-Synthese mittels HCl oder H₂ oder entsprechenden Gemischen beschrieben. Beispielsweise in der EP 155626 A ist die AlCl₃-katalysierte Umwandlung von Hochsiedern und Leichtsiedern in Richtung besser verwertbare Monosilane beschrieben.
Bei der Aufarbeitung dieser Reaktionsprodukte treten vergleichbare Probleme auf, wie sie bei der Direktsynthese beschrieben wurden.

### 3. Aminkatalysierte Disilanspaltung.

Verschiedene Methylchlordisilane, die als Nebenprodukt bei der Direktsynthese anfallen, können mit Chlorwasserstoff direkt in Methylchlormonsilane überführt werde (Disilanspaltung). Diese Reaktion wird beispielsweise durch tertiäre Amine, wie Tributylamin, katalysiert und ist in (3) auf Seite 30 - 31 beschrieben. AlCl₃ bildet aber mit Aminen Komplexe die keine/eine sehr stark verringerte katalytische Aktivität haben, d.h. ist bei der Disilanspaltung AlCl₃ in ausreichenden Mengen vorhanden, kommt die Reaktion zum Erliegen.

Es bestand die Aufgabe, ein Verfahren bereitzustellen, welches ermöglicht, aus AlCl₃-haltigen Organochlorsilanströmen das AlCl₃ und gegebenenfalls weitere vorhandene Feststoffe auf einfache Art auch dann abtrennen zu können, wenn auf Grund des Siedepunktes der Organochlorsilane eine herkömmliche destillative Trennung nicht effektiv ist.

Gegenstand der Erfindung ist ein Verfahren zur Abtrennung von AlCl₃ aus einem Organochlorsilane enthaltenden Verbindungsgemisch (V1) mit einem AlCl₃-Gehalt von >200 ppm bezogen auf den Gehalt an Organochlorsilanen, bei dem das Verbindungsgemisch (V1) mit Verbindungen (V2); die ausgewählt werden aus Organochlorsilanen oder Mischungen aus Chlormethan und Organochlorsilanen derart verdünnt wird, dass ein Produktstrom (P) mit < 15 % Feststoffen, bei einer gleichzeitigen Konzentration < 25% an Komponenten mit einem Siedepunkt > 71°C bei 1013 hPa anfällt und dieser Produktstrom (P) in einer Verdampfereinheit bei einer Temperatur < 165°C in flüchtige Verbindungen (FV) und AlCl₃ haltigen Feststoff (F) aufgetrennt wird, wobei alle Konzentrationsangaben auf das Gewicht bezogen sind.

Durch die Verdünnung des Verbindungsgemisches (V1) mit den weitgehend feststoff- und hochsiederfreien Verbindungen (V2) werden durch den "Mitreißeffekt" auch Organochlorsilane mit einem Siedepunkt der oberhalb der Verdampfertemperatur liegt nahezu vollständig verdampft, so dass der anfallende AlCl₃ haltige Feststoff (F) trocken ist und somit einfach gehandhabt werden kann.

Das Verbindungsgemisch (V1) stammt bevorzugt aus der Aufarbeitung des Produktgemisches aus der Direktsynthese von Alkylchlorsilanen oder aus der AlCl₃-katalysierten Hochsiederspaltung der Nebenprodukte der Direktsynthese.

Bei der Direktsynthese von Alkylchlorsilanen der allgemeinen Formel (I) RₐH_{b}SiCl_{4-a-b}, in der a die Werte 1, 2, 3 oder 4 und b die Werte 0, 1 oder 2 bedeuten, aus Siliciummetall und Alkylchloriden R-C1, wobei R einen Alkylrest bedeutet, entstehen als Nebenprodukte Di- und Oligosilane, Carbosilane, Siloxane und hochsiedende Crackprodukte.

Das Organochlorsilane enthaltende Verbindungsgemisch (V1) weist vorzugsweise einen AlCl₃-Gehalt von >300 ppm, besonders bevorzugt > 500 ppm auf. Das Verbindungsgemisch (V1) kann neben AlCl₃ noch weitere Feststoffe in gelöster oder ungelöster Form enthalten.

Die Konzentration an Organosilanen mit einem Siedepunkt von über 71°C beträgt im Verbindungsgemisch V(1) bevorzugt > 25%, besonders bevorzugt > 35%, insbesondere > 45%.

Das Verbindungsgemisch V(2) weist vorzugsweise einen AlCl₃-Gehalt von < 50 ppm, besonders bevorzugt < 30 ppm, insbesondere < 20 ppm auf. Die Konzentration an Organosilanen mit einem Siedepunkt von über 71°C beträgt im Verbindungsgemisch V(2) vorzugsweise < 5%, besonders bevorzugt < 3%, insbesondere < 1%. Das Verbindungsgemisch V(2) kann weitere leichtflüchtige Komponenten wie beispielsweise Chlormethan enthalten.

Das Mischungsverhältnis aus V(1) und V(2) wird so eingestellt, dass der Feststoffgehalt des resultierenden Produktstroms (P) < 15 Gew.%, bevorzugt < 8 Gew.%, besonders bevorzugt < 4 Gew.% beträgt und der Anteil an Komponenten mit einem Siedepunkt über 71°C < 25%, bevorzugt < 15%, besonders bevorzugt < 10% beträgt. Falls erwünscht können neben den Verbindungsgemischen V(1) und V(2) noch weitere feststoffhaltige Ströme wie beispielsweise nicht mehr verwertbare Silicium-Stäube aus der Direktsynthese oder Suspensionen von Si-Stäuben aus der Direktsynthese, wie sie beispielsweise in Zyklonen, Filtern und Schlämmen anfallen, zugesetzt werden, mit der Maßgabe, dass die o.g. Merkmale für den Produktstrom (P) eingehalten werden. Hierzu wird auf (3) Figure 3, verwiesen (incorporated by reference).

Der Produktstrom (P) wird bevorzugt bei < 155°C, besonders bevorzugt bei < 145°C getrennt. Die Verdampfereinheit wird so ausgeführt, dass die Auftrennung in weitgehend trockene Feststoffe (F) und gasförmige flüchtige Verbindungen (FV) möglichst rasch erfolgt. Der Fachmann bezeichnet eine derartige Trennung auch als "Flash-Verdampfung", d.h. es gibt keine Blase/Sumpf, in der der Produktstrom (P) laufend beheizt wird. Ein derartige Verdampfereinheit kann beispielsweise eine Einheit zur Sprühverdampfung, Dünnschicht- oder Dünnfilmverdampfung sein.

Falls erwünscht können beim raschen Verdampfen noch weitere leichtflüchtige oder gasförmige Verbindungen derart zudosiert werden, dass die Ableitung der verdampften flüchtigen Verbindungen (FV) begünstigt wird. Diese Verbindungen müssen sich aber im System chemisch inert verhalten. Als gasförmige Komponenten können beispielsweise Edelgase oder Stickstoff zum Einsatz kommmen, als leichtflüchtige Verbindung kann beispielsweise Chlormethan zum Einsatz kommen.

Die gasförmig abgezogenen flüchtigen Verbindungen (FV) sind weitgehend frei von unerwünschten AlCl₃-Verunreinigungen, beim Verdampfen mitgerissene Feststoffe können, falls erwünscht, vor oder nach der Kondensation nochmals mittels Filtration abgetrennt werden.

Alle angegebenen Temperaturen beziehen sich auf Normaldruck (1013 hPa). Das erfindungsgemäße Verfahren kann auch bei reduzierten wie auch bei erhöhtem Druck zur Anwendung kommen. Da die Sublimationstemperaturen wie auch die Siedetemperaturen stark vom Druck abhängen, ändern sich in diesem Falle die Temperaturen entsprechend.
Alle angegebenen Konzentrationsangaben beziehen sich auf das Gewicht.

### Beispiele

### Apparatur:

Ein Dreihals-Glaskolben mit aufgesetztem Tropftrichter, Gaszuleitung und wärmeisolierter Gasableitung wird in ein elektrisch beheiztes Ölbad mit der Temperatur [T] getaucht. Über die Gaszuleitung kann bei Bedarf Stickstoff ins System eingebracht werden, über den Tropftrichter wird der Produktstrom [P] so schnell zudosiert, dass sich im stationären Zustand keine merklichen Anteile an flüssigen Produkten im beheizten Kolben befinden. Die verdampften Organochlorsilane, Kohlenwasserstoffe, Chlorkohlenwasserstoffe und der gegebenenfalls eingespeiste Stickstoff verlassen über die isolierte Gasableitung den Kolben und werden einem, mit Trockeneis gekühlten, Kondensationssystem zugeführt [D = Kondensat]. Die mit dem Produktstrom [P] eingebrachten Feststoffe sowie die meisten der in [P] gelösten Metallchloride verbleiben weitgehend im Kolben.
Die Analytik der Organochlorsilane, Kohlenwasserstoffe, Chlorkohlenwasserstoffe erfolgte mittels GC. Die Bestimmung der Aluminiumgehalte in der Organochlorsilanen, wie auch die Analytik der Feststoffe erfolgte mittels ICP.
Alle Beispiele wurden bei Normaldruck-durchgeführt.

### Vergleichsbeispiel 1

Es soll der Nachweis erbracht werden, dass durch durch eine herkömmliche Destillation hochsiedende Organochlorsilane und AlCl₃ nicht effektiv getrennt werden können.
In einer laborüblichen diskontinuierlichen Destillationsanlage wird AlCl₃ und feststoffhaltiges Rohsilangemisch einer fraktionierten Destillation bis zu einer Sumpftemperatur von 167°C unterworfen. Die erhalten feststofffreien Destillate 1-A bis 1-E und der feststoffhalte flüssige Rückstand 1-R wurden analysiert. Die Ergebnisse sind in Tabelle 1 aufgeführt.

**Tabelle 1**

| Fraktion | 1-A | 1-B | 1-C | 1-D | 1-E | 1-R |
|---|---|---|---|---|---|---|
| Kopftemperatur (°C) | 20 - 65 | 65 - 70 | 70 - 75 | 75 - 78 | 78 - 160 | |
| Summe aus Dimethytetrachlordisilan und Trimethyltrichlordisilan | 3,5 | 3,7 | 8,2 | 12,3 | 78,8 | 83,7 |
| Verbindungen mit einem Siedepunkt > 75°C, ohne Dimethytetrachlordisilan und Trimethyltrichlordisilan | 1,3 | 1,3 | 4,4 | 3,4 | 11,3 | 15,9 |
| Aluminiumgehalt (ppm) | <3 | <3 | 3 | 4 | 185 | 8200 |

### Beispiel 2 - 4

Die Produktströme [V1] und [V2] und 3 Gew.% feinste Siliciumstäube, wie sie in (3) Figure 3. "Filter" beschrieben werden, wurden in jenem Verhältnis gemischt, dass der Produktstrom [P] entstand. Dieses Gemisch wurde in die beschriebene Apparatur bei einer Ölbadtemperatur von 140°C, 150°C und 160°C dosiert, wobei zusätzlich über die Gaszuleitung ein geringer Stickstoffstrom eingespeist wurde. Die dabei erhaltene feststofffreien Kondensate [D] enthielten in allen Fällen einen Al-Gehalt von <2 ppm. Die Ergebnisse sind in Tabelle 2 aufgeführt.

**Tabelle 2**

| | V-1 | V-2 | P |
|---|---|---|---|
| Chlormethan | 0 | 5,9 | 4,9 |
| Dimethylchlorsilan | 0 | 0,7 | 0,5 |
| Methyldichlorsilan | 0 | 8,2 | 7,3 |
| Trimethylchlorsilan | 0,2 | 3,8 | 3,3 |
| Methyltrichlorsilan | 0,8 | 7,3 | 6,6 |
| Dimethyldichlorsilan | 41,9 | 72,0 | 70,1 |
| Summe aus Dimethytetrachlordisilan und Trimethyltrichlordisilan | 47,7 | 0,0 | 4,8 |
| Verbindungen mit einem Siedepunkt > 71°C, ohne Dimethytetrachlordisilan und Trimethyltrichlordisilan | 9,4 | 2,1 | 2,6 |
| Aluminiumgehalt (ppm) | 750 | 5 | 80 |

### Beispiel 5

Analog Beispiel 2 - 4, mit der Änderung, dass das Mischungsverhältnis aus [V1] und [V2] geändert wurde und dadurch der Produktstrom [P] die nachstehende Zusammensetzung aufwies, die Ölbadtemperatur betrug 160°C. Das dabei erhaltene feststofffreie Kondensat [D] enthielten einen Al-Gehalt von 6 ppm. Die Ergebnisse sind in Tabelle 3 aufgeführt.

**Tabelle 3**

| | P |
|---|---|
| Chlormethan | 4,4 |
| Dimethylchlorsilan | 0,5 |
| Methyldichlorsilan | 6,5 |
| Trimethylchlorsilan | 3,1 |
| Methyltrichlorsilan | 6,0 |
| Dimethyldichlorsilan | 66,2 |
| Summe aus Dimethytetrachlordisilan und Trimethyltrichlordisilan | 9,6 |
| Verbindungen mit einem Siedepunkt > 71°C, ohne Dimethytetrachlordisilan und Trimethyltrichlordisilan | 3,6 |
| Aluminiumgehalt (ppm) | 170 |

### Beispiel 6:

Analog Beispiel 2 - 4, mit der Änderung, dass ein anderers Verbindungsgemisch [V2] zum Einsatz kam, auf die zusätzliche Dosierung von Si-Stäuben verzichtet wurde und während des Versuches kein Stickstoff in die Anlage dosiert wurde. Das dabei erhaltene feststofffreie Kondensat [D] enthielten einen Al-Gehalt von <2 ppm. Die Ergebnisse sind in Tabelle 4 aufgeführt.

**Tabelle 4**

| | V-1 | V-2 | P |
|---|---|---|---|
| Dimethylchlorsilan | 0 | 0,2 | 0,2 |
| Methyldichlorsilan | 0 | 3,0 | 2,7 |
| Trimethylchlorsilan | 0,2 | 2,1 | 1,9 |
| Methyltrichlorsilan | 0,8 | 6,0 | 5,5 |
| Dimethyldichlorsilan | 41,9 | 87,8 | 83,2 |
| Summe aus Dimethytetrachlordisilan und Trimethyltrichlordisilan | 47,7 | 0,0 | 4,8 |
| Verbindungen mit einem Siedepunkt > 71°C, ohne Dimethytetrachlordisilan und Trimethyltrichlordisilan | 9,4 | 1,0 | 1,8 |
| Aluminiumgehalt (ppm) | 750 | <5 | 70 |

## Patentansprüche

1. Verfahren zur Abtrennung von AlCl₃ aus einem Organochlorsilane enthaltenden Verbindungsgemisch (V1) mit einem AlCl₃-Gehalt von >200 ppm bezogen auf den Gehalt an Organochlorsilanen, bei dem das Verbindungsgemisch (V1) mit Verbindungen (V2), die ausgewählt werden aus Organochlorsilanen oder Mischungen aus Chlormethan und Organochlorsilanen derart verdünnt wird, dass ein Produktstrom (P) mit < 15 % Feststoffen, bei einer gleichzeitigen Konzentration < 25% an Komponenten mit einem Siedepunkt > 71°C bei 1013 hPa anfällt und dieser Produktstrom (P) in einer Verdampfereinheit bei einer Temperatur < 165°C in flüchtige Verbindungen (FV) und AlCl₃ haltigen Feststoff (F) aufgetrennt wird, wobei alle Konzentrationsangaben auf das Gewicht bezogen sind..

2. Verfahren nach Anspruch 1, bei dem das Organochlorsilane enthaltende Verbindungsgemisch (V1) aus der Direktsynthese von Alkylchlorsilanen oder aus der AlCl₃-katalysierten Hochsiederspaltung der Nebenprodukte der Direktsynthese stammt.

3. Verfahren nach Anspruch 1 oder 2, bei dem die Organochlorsilane Alkylchlorsilane der allgemeinen Formel RₐH_{b}SiCl_{4-a-b} sind, in der a die Werte 1, 2, 3 oder 4, b die Werte 0, 1 oder 2 und R einen Methyl-, Ethyl-, Butyl- oder Propylrest bedeuten.

4. Verfahren nach Anspruch 1 bis 3, bei dem die eingesetzte Verdampfereinheit eine Einheit zur Sprühverdampfung, Dünnschicht- oder Dünnfilmverdampfung ist.

## Claims

1. Process for removing AlCl₃ from a compound mixture (C1) comprising organochlorosilanes and having an AlCl₃ content of > 200 ppm based on the content of organochlorosilanes, in which the compound mixture (C1) is diluted with compounds (C2) which are selected from organochlorosilanes or mixtures of chloromethane and organochlorosilanes in such a way that a product stream (P) with < 15% solids at a simultaneous concentration of < 25% of components having a boiling point > 71°C at 1013 hPa is obtained, and this product stream (P) is separated in an evaporator unit at a temperature < 165°C into volatile compounds (VC) and AlCl₃-containing solid (S), all concentration data being based on the weight.

2. Process according to Claim 1, in which the compound mixture (C1) comprising organochlorosilanes stems from the direct synthesis of alkylchlorosilanes or from the AlCl₃-catalysed high boiler cleavage of the by-products of the direct synthesis.

3. Process according to Claim 1 or 2, in which the organochlorosilanes are alkylchlorosilanes of the general formula RₐH_{b}SiCl_{4-a-b} in which a is 1, 2, 3 or 4, b is 0, 1 or 2, and R is a methyl, ethyl, butyl or propyl radical.

4. Process according to Claims 1 to 3, in which the evaporator unit used is a unit for spray evaporation, thin-layer or thin-film evaporation.

## Revendications

1. Procédé de séparation de AlCl₃ d'un mélange de composés contenant des organochlorosilanes (V1) ayant une teneur en AlCl₃ de plus de 200 ppm, par rapport à la teneur en organochlorosilanes, et dans lequel le mélange de composés (V1) est dilué par des composés (V2) choisis parmi des organochlorosilanes ou des mélanges de chlorométhane et d'organochlorosilanes, de manière qu'il se forme un courant de produit (P) contenant moins de 15% de solides, avec une concentration simultanée de moins de 25% de composants ayant un point d'ébullition de plus de 71°C à 1013 hPa, et ce courant de produit (P) est séparé dans une unité d'évaporation à une température inférieure à 165°C, en composés volatils (CV) et solide (S) contenant du-AlCl₃, toutes les indications de concentration étant en poids.

2. Procédé suivant la revendication 1, dans lequel le mélange de composés (V1) contenant des organochlorosilanes provient de la synthèse directe d'alkylchlorosilanes ou de la séparation à haut point d'ébullition, catalysée par AlCl₃, des sous-produits de la synthèse directe.

3. Procédé suivant la revendication 1 ou 2, dans lequel les organochlorosilanes sont des alkylchlorosilanes de la formule générale RₐH_{b}SiCl_{4-a-b}, dans laquelle a vaut 1, 2, 3 ou 4, b vaut 0, 1 ou 2 et R représente un radical méthyle, éthyle, butyle ou propyle.

4. Procédé suivant l'une quelconque des revendications 1 à 3, dans lequel l'unité d'évaporation mise en oeuvre est une unité d'évaporation à pulvérisation, à couche mince ou à film mince.
